# EUROPÄISCHE PATENTANMELDUNG

(11) **EP 1 887 773 A1**
(43) Veröffentlichungstag der Anmeldung: **13.02.2008**
(21) Anmeldenummer: 06016879.6
(22) Anmeldetag: 11.08.2006
(51) Int. Cl.: H04M 7/00, H04L 29/06, H04Q 7/22

(54) **Erkennen des korrekten SIP Established Dialogues im Falle des Verlustes von Nachrichten**

(71) Anmelder: Nokia Siemens Networks GmbH & Co. KG, 81541 München (DE)
(72) Erfinder: Belling, Thomas, Dr., 81477 München (DE)

(57) **Zusammenfassung**

Die Erfindung betrifft Vorrichtungen und Verfahren zum Aufbau einer Verbindung in einem zellularen Mobilfunknetz, dadurch gekennzeichnet, dass wenn eine Steuerungseinrichtung (P-CSCF) nach Erhalt einer ersten "2xx Final Responses" Nachricht als Antwort auf eine "SIP INVITE" Nachricht und vor Erhalt einer "ACK" Nachricht als Bestätigung dieser ersten "2xx Final Responses" Nachricht mindestens eine weitere "2xx Final Response" Nachricht als Antwort auf diese "SIP INVITE" Nachricht erhält, die Steuerungseinrichtung (P-CSCF) beim Erhalt jeder SIP "BYE" Nachricht bezüglich eines der durch die "2xx Final Response" Nachricht erzeugten Etablierten Dialogs ("Established Dialogue") überprüft, ob noch genau ein anderer den "2xx Final Responses" zugeordneter Etablierter Dialog ("Established Dialogue") durch eine "BYE" Nachricht beendet wurde, und in diesem Fall einen Kontrollknoten (KK), zum Beispiel eine Policy Decision Function", eine "Charging Rules Function", oder eine "Policy and Charging Rules Function", informiert, dass jetzt ausschließlich die zu dem genau einen nicht beendeten Etablierten Dialog ("Established Dialogue") gehörenden Medienströme verwendet werden sollen.

## Beschreibung

Die Erfindung betrifft Verfahren und Vorrichtungen zum Aufbau einer Verbindung in einem zellularen Mobilfunknetz.

Gemäß 3GPP TS 29.209, bzw. 29.211, bzw. 29.214 versorgt im Rahmen der Prozeduren zur so genannten "Service Based Local Policy" (SBLP), bzw. zum so genannten "Flow Based Charging" (FBC) bzw. zum so genannten "Policy and Charging Control" (PCC) eine so genannte "Applikationsfunktion" (AF) einen Kontrollknoten (KK) ("Policy Decision Function" (PDF), bzw. "Charging Rules Function" (CRF), bzw. "Policy and Charging Rules Function" (PCRF)) mit Informationen über gerade ausgeführte Dienste. Beispielsweise dient im "Internet Multimedia Subsystem" (IMS), das in 3GPP TS 23.228 standardisiert ist, die so genannte "Proxy Call Session Control Function" (P-CSCF) als AF. Die P-CSCF reicht SIP-Signalisierung zur Kontrolle von Diensten zwischen einem IMS und einem Endgerät weiter, und reicht aus dem eingebettet SDP abgeleitete Information bezüglich des Dienstes, im Besonderen über die Art der Medienströme, an die PCRF weiter. Das so genannte "Session Initiation Protocol" (SIP) ist von der IETF in RFC 3261 und in einer älteren Version in RFC 2543 standardisiert. SIP nützt zur Beschreibung der vermittelten Kommunikationsverbindung das so genannte "Session Description Protocol" (SDP), IETF RFC 4556 und in einer älteren Version RFC 2327, in einer in IETF RFC 3264 beschriebenen Weise. Der KK nützt die vom AF erhaltene Information über Dienste, um Zugangsnetzverbindung(en) und/oder Vergebührung für diese Dienste zu konfigurieren bzw. zu autorisieren.

Für die weiter unten genauer beschriebene so genannte SIP "Forking" Prozedur sind für die P-CSCF spezielle Prozeduren hinsichtlich der Information des KK standardisiert. Eine Aufgabe dieser Prozeduren ist es, dass die P-CSCF den KK über diejenigen Medienströme informiert, die zu dem SIP Dialog gehören, den das Endgerät am Ende des Aufbaus eines Dienstes ausgewählt. Allerdings können die gegenwärtig standardisierten Prozeduren dann zu Fehlern führen, wenn zwischen P-CSCF und Endgerät, zum Beispiel bei der Übertragung über die Luftschnittstelle, SIP Nachrichten verloren gehen.
Ziel der vorliegenden Erfindung ist es, der AF zu ermöglichen, auch dann den vom Endgerät ausgewählten SIP Dialog zu erkennen, wenn SIP Nachrichten verloren gehen, und den KK entsprechend zu informieren.

Beim Rufaufbau von dem SIP Endgerät eines Anrufers A zu einem angerufenen Nutzer B kann die SIP- Signalisierung von Vermittlungsknoten, so genannten "Proxies", weitergereicht werden. Dabei ist es den Proxies erlaubt, eine eingehende Nachricht, die den Wunsch des Nutzers A nach einer Verbindung zu B anzeigt (ein so genannter "INVITE Request") an mehrere andere Proxies oder SIP Endgeräte gleichzeitig oder sequentiell weiterzureichen, zum Beispiel um den Nutzer B zu suchen. Da auch darauf folgende Proxies die Nachricht beim Weiterreichen verzweigen können, kann es zu einer baumartigen Verzweigung der Nachricht kommen. Dieses verzweigte Weiterreichen von Nachrichten wird in SIP als "Forking" bezeichnet. Wenn die INVITE Nachricht ein Endgerät des Nutzers B erreicht, kann dieses Endgerät mit einer so genannten "1xx Provisional Response" Nachricht antworten, die zum Beispiel dazu dienen kann, die zur Kommunikationsverbindungen verwendeten Medien (z.B. Sprache, Video) und ihre Codierung auszuhandeln, oder aber dazu anzuzeigen, das ein Nutzer B alarmiert wird (zum Beispiel durch das Klingeln seines SIP-Telefons). Es kann im Fall von Forking vorkommen, dass mehrere Endgeräte solche Provisional Responses schicken, beispielsweise wenn mehrere SIP-Telefone gleichzeitig klingeln. Zum Abschluss des Aufbaus der Kommunikationsbeziehung zwischen A und einem Endgerät von B antwortet dieses Endgerät mit einer so genannten "2xx Final Response", beispielsweise wenn Nutzer B das SIP-Telefon abgehoben hat. Mehrere Endgeräte von B können solche "Final Responses" (=endgültige Antworten) schicken, beispielsweise wenn mehrere klingelnde SIP-Telefone abgehoben werden. Entsprechend kann es vorkommen, dass das Endgerät eine Teilnehmers A "Provional Responses" und / oder "Final Responses" von mehreren Endgeräten eines Teilnehmers B erhält. Jedes Endgerät von B versieht alle Nachrichten, die es als Antworten an A sendet, mit der gleichen eindeutigen Identifizierung. Erreichen das Endgerät von A SIP Antwortnachrichten mit einer neuen Identifizierung, erfährt das Endgerät von A dadurch, dass es mit einem neuen Endpunkt kommuniziert. In SIP spricht man in diesem Fall davon, dass zwischen dem Endgerät von A und dem antwortenden Endgerät von B ein so genannter "Dialog" besteht. Bevor A für einen Dialog eine "final Response" erhalten hat, spricht man von einem "frühen Dialog" (engl. "Early Dialogue"), danach von einem "etablierten Dialog" (engl. "Established Dialogue").
Sobald ein Endgerät B durch Senden einer "2xx Final Response" einen etablierten Dialog erzeugt, beenden in vielen Fällen diejenigen Proxies, die durch Forking weitere frühe Dialoge verursacht haben, diese frühen Dialoge durch Signalisierung mit den anderen Endgeräten B. Wenn jedoch mehrere Endgeräte B nahezu gleichzeitig mehrere "2xx Final Response" Nachrichten senden, können alle diese Nachrichten Endgerät A erreichen und dazu führen, dass mehrere etablierten Dialoge entstehen. Gemäß 3GPP TS 23.228, Kapitel 4.2.7.3, soll in diesem Fall ein IMS Terminal als Endgerät A allerdings nur den ersten etablierten Dialog weiterführen, und die anderen durch Senden von SIP "BYE" Nachrichten sofort beenden.
Die P-CSCF soll entsprechend den KK über diejenigen Medienströme informieren, die zu dem ersten etablierten SIP Dialog gehören, der das Endgerät A am Ende des Aufbaus eines Dienstes erreicht.

Bisher ist standardisiert, dass die P-CSCF den KK beim Erhalt der ersten "2xx Final Response" informiert, dass jetzt ausschließlich die zu dem entsprechenden ersten etablierten Dialog gehörenden Medienströme verwendet werden sollen. Der KK konfiguriert und/oder autorisiert die Zugangsnetverbindungen entsprechend.
Allerdings kann es vorkommen, dass die "2xx Final Response" Nachricht bei der Übertragung von P-CSCF zu dem Endgerät A verloren geht. Wenn in der Folge eine zu einem anderen zweiten Dialog gehörende "2xx" Nachricht von dem Terminal A empfangen wird, wählt das Terminal diesen zweiten Dialog aus. Da aber auf Grund der von der P-CSCF erhaltenen Information durch den KK die Zugangsnetzverbindungen für die Datenströme des ersten Dialogs konfiguriert und/oder autorisiert wurden, werden die Datenströme des vom Endgerät A ausgewählten zweiten etablierten Dialog nicht transportiert, und der Dienst schlägt dadurch fehl.

Das beschriebene Problem wurde im letzten 3GPP CT3 Meeting erkannt, aber bisher wurde dafür noch keine Lösung gefunden.

Aufgabe der vorliegenden Erfindung ist unter Vermeidung der genannten Probleme den Verbindungsaufbau zu optimieren. Die Aufgabe wird jeweils durch die in den unabhängigen Ansprüchen definierte Erfindung gelöst.

### Ein Kern der Erfindung ist der folgende Algorithmus:

Wenn die P-CSCF nach Erhalt einer ersten "2xx Final Response" Nachricht, zum Beispiel eine SIP "200 OK" Nachricht" als Antwort auf eine SIP "INVITE" Nachricht und vor Erhalt einer "ACK" Nachricht als Bestätigung dieser ersten "2xx Final Response" Nachricht mindestens eine weitere "2xx Final Response" Nachricht als Antwort auf diese SIP "INVITE" Nachricht erhält, überprüft die P-CSCF beim Erhalt jeder SIP "BYE" Nachricht bezüglich eines der durch die "2xx" Nachrichten erzeugten etablierten Dialoge ("Established Dialogues"), ob noch genau ein anderer der den "2xx Final Response" Nachrichten entsprechender etablierten Dialog nicht durch eine "BYE" Nachricht beendet wurde, und informiert in diesem Fall den KK, dass jetzt ausschließlich die zu dem genau einen nicht beendeten etablierten Dialog gehörenden Medienströme verwendet werden sollen.

Vorzugsweise informiert die P-CSCF wie bisher standardisiert den KK bereits bei Erhalt der ersten "2xx Final Response" Nachricht, dass jetzt ausschließlich die zu dem entsprechenden ersten etablierten Dialog gehörenden Medienströme verwendet werden sollen, und informiert den KK in der Folge nur dann, wenn der genau eine nicht beendete etablierten Dialog nicht mit dem der ersten empfangenen "2xx Final Response" Nachricht entsprechenden etablierten Dialog identisch ist, dass jetzt ausschließlich die zu dem genau einen nicht beendeten etablierten Dialog gehörenden Medienströme verwendet werden sollen. Damit wird in der größten Zahl der Fälle bereits früher eine korrekte Konfiguration des KK erreicht.

Wenn die P-CSCF nicht bereits beim Erhalt der ersten "2xx Final Response" Nachricht den KK informiert hat und ohne zwischenzeitlichen Empfang mindestens einer weiteren "2xx Final Response" Nachricht die "ACK" Nachricht zur ersten "2xx Final Response" Nachricht empfängt, informiert die P-CSCF nun den KK, dass jetzt ausschließlich die zu dem entsprechenden ersten etablierten Dialog gehörenden Medienströme verwendet werden sollen.

Die P-CSSF fügt vorzugsweise beim Erhalt jeder "2xx Final Response" Nachricht den entsprechenden SIP Dialog in einer der "INVITE" Nachricht zugeordneten Liste ein, sofern der Dialog darin nicht bereits enthalten ist, und löscht beim Erhalt jeder SIP "Bye" Nachricht den entsprechenden SIP Dialog aus dieser gespeicherten Liste und überprüft dann ob die Liste noch genau einen SIP Dialog enthält.

Die vorliegende Erfindung stellt sicher, dass auch wenn im Falle von SIP Forking SIP Nachricht bei der Übertragung von P-CSCF zu dem Endgerät A verloren gehen, die P-CSCF den KK korrekt über die dem vom Endgerät A ausgewählten etablierten Dialog entsprechenden Datenströme informiert. Damit wird sichergestellt, dass die Zugangsnetzverbindungen für die Datenströme dieses Dialogs konfiguriert und/oder autorisiert werden und die Verbindung der Datenströme somit nicht unterbrochen wird.
Der erfindungsgemäße Algorithmus liefert sowohl bei Verlust der 2xx Nachricht wie auch bei dem nahezu ebenso wahrscheinlichen Verlust der darauf folgenden Ack Nachricht und auch für eine beliebige Anzahl von etablierten Dialogen das richtige Ergebnis.

Weitere Merkmale und Vorteile der Erfindung ergeben sich aus den Patentansprüchen und der nachfolgenden Beschreibung eines Ausführungsbeispiels anhand der Zeichnung, Dabei zeigt:
Fig. 1: eine typische Konfiguration der Netzkomponenten,
Fig. 2: ein Signalisierungsdiagramm für den Fehlerfall "SIP 200 OK Nachricht verloren" und
Fig. 3: ein Signalisierungsdiagramm für den Fehlerfall "SIP ACK Nachricht verloren".

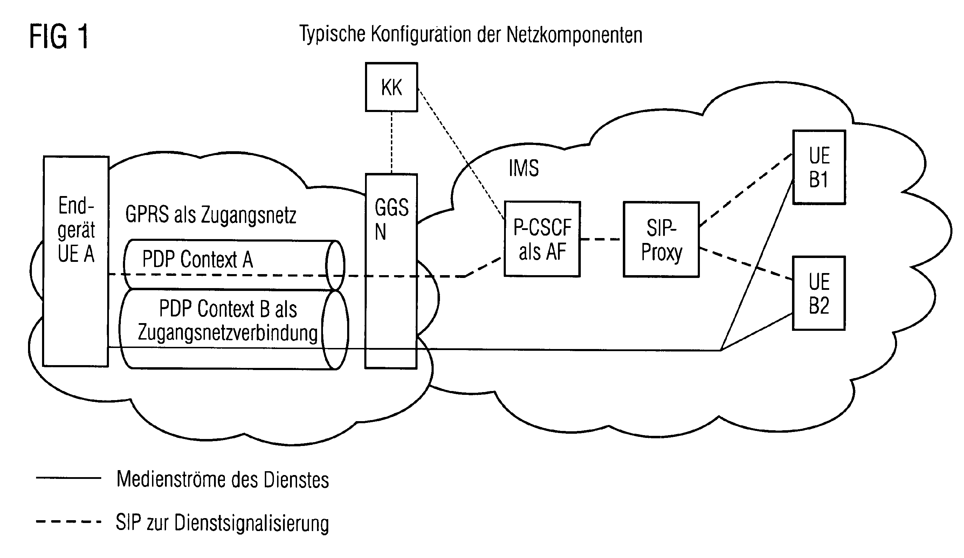

Fig. 1 zeigt eine typische Konfiguration der Netzkomponenten. Es sind ein mobiles Endgerät UE A, eine "Gateway GPRS Support Node" GGSN, ein Kontrollknoten KK (Beispielsweise eine "Policy Decision Function" (PDF), eine "Charging Rules Function" (CRF), oder eine "Policy and Charging Rules Function" (PCRF)) und eine "Proxy Call Session Control Function" P-CSCF als Applikationsfunktion AF innerhalb eines Internet Multimedia Subsystem IMS dargestellt. UE A nützt zwei PDP Kontexte A und B als Zugangsnetzverbindungen zum GGSN durch das mobile Zugangsnetz GPRS. In PDP Context A wird SIP Signalisierung bezüglich eines Dienstes, wie beispielsweise VoIP, zwischen UE and P-CSCF befördert. P-CSCF reicht diese Signalisierung zum bzw. vom IMS weiter. PDP Context B wird als Zugangsnetzverbindung für den Dienst verwendet. Der KK konfiguriert und/oder autorisiert PDP Context B für die Datenströme des Dienstes. Weiterhin ist ein SIP-Proxy dargestellt, der mit zwei SIP Endgeräten UE B1 und UE B2 verbunden ist..

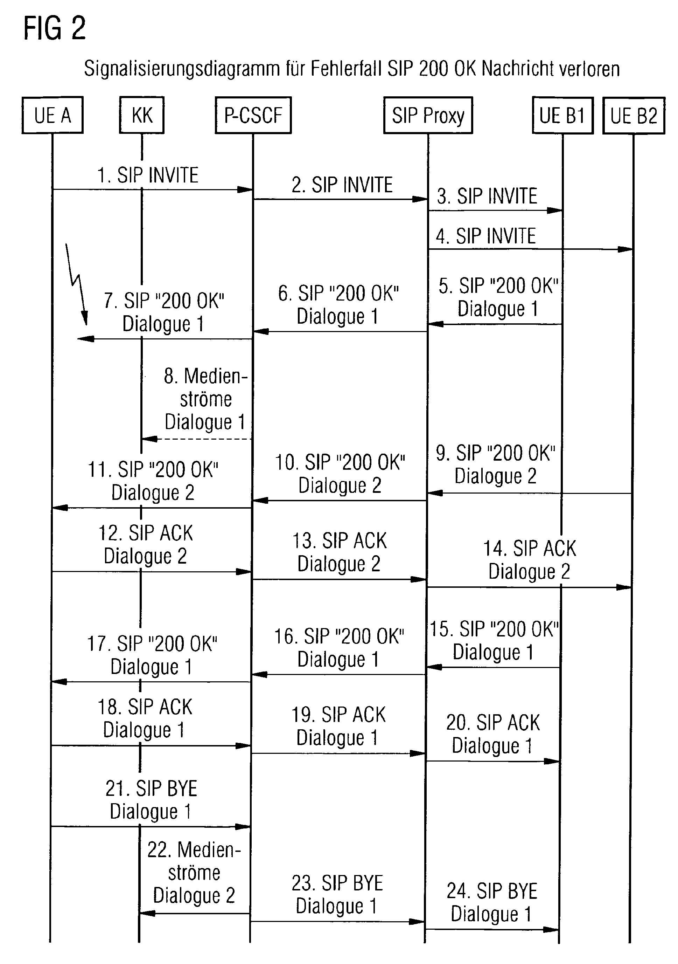

Fig. 2 zeigt ein Signalisierungsdiagramm für Fehlerfall "SIP 200 OK Nachricht verloren".
Es ist ein Signalisierungsverlauf zwischen den in Fig. 1 dargestellten Netzwerkelementen dargestellt. Es wird angenommen, dass der SIP Proxy einen von UE A gesendete SIP INVITE Nachricht "forked", also verzweigt und zu UE B1 sowie UE B2 weiterleitet. Verschiedene für das Verständnis nicht wichtige SIP Nachrichten werden nicht dargestellt.

Der Signalisierungsverlauf ist im Einzelnen wie folgt:
1. UE A sendet eine SIP "INVITE" Nachricht, um einen neuen Dienst zu starten.
2. P-CSCF reicht die "INVITE" Nachricht weiter. In dieser und weiteren SIP Nachrichten sind unter Anderem Angaben bezüglich der zum Dienst gehörenden Datenströme enthalten.
3. SIP-Proxy beschließt, die SIP "INVITE" Nachricht zu "forken", um den angerufenen Teilnehmer zu suchen, und reicht die "INVITE" Nachricht zu UE B1 weiter.
4. SIP-Proxy reicht die "INVITE" Nachricht zu UE B2 weiter.
5. UE B1 akzeptiert den Dienst durch Senden einer SIP "2xx Final Response" Nachricht, hier einer "200 OK(INVITE)" Nachricht. Die Nachricht enthält für einen ersten Dialog eine Kennzeichnung "Dialogue 1".
6. SIP-Proxy reicht die "200 OK" Nachricht weiter.
7. P-CSCF speichert den Dialog 1 in einer Liste. P-CSCF reicht die "200 OK" Nachricht weiter. Es wird angenommen, dass diese Nachricht bei der Übertragung verloren geht.
8. In einer vorteilhaften Ausführungsform informiert P-CSCF den KK bereits zu diesem Zeitpunkt über die Dialog 1 entsprechenden Datenströme. Dadurch wird in dem Normalfall, dass keine Nachrichten verloren gehen, bereits zu diesem Zeitpunkt der KK korrekt informiert. Anderseits kann es in dem in Fig. 2 dargestellten Fehlerfall, dass Nachricht 7 verloren wird, dazu kommen, dass die Datenströme zeitweilig unterbrochen werden.
9. UE B2 akzeptiert den Dienst durch Senden einer SIP "2xx Final Response" Nachricht, hier einer "200 OK(INVITE)" Nachricht. Die Nachricht enthält für einen zweiten Dialog eine Kennzeichnung "Dialogue 2".
10. SIP-Proxy reicht die 200 OK weiter.
11. P-CSCF speichert den Dialog 2 in einer Liste. P-CSCF reicht die 200 OK weiter.
12. UE A wählt Dialog 2 gemäß 3GPP Standard als beizubehaltenden etablierten Dialog. UE A bestätigt den Empfang der SIP 200 OK Nachricht 11 gemäß SIP Standard durch Senden einer SIP ACK Nachricht.
13. P-CSCF reicht die SIP ACK Nachricht weiter
14. SIP Proxy reicht die SIP ACK Nachricht weiter
15. Da UE B1 keine ACK Nachricht als Antwort auf die SIP 200 OK Nachricht 5 empfangen hat, wiederholt er nach Ablauf eines kurzen Zeitraums das Senden der SIP 200 OK Nachricht.
16. SIP-Proxy reicht die 200 OK weiter.
17. P-CSCF stellt fest, dass Dialog 1 bereits in der Liste der Dialoge enthalten ist und nicht erneut abgespeichert werden muss. P-CSCF reicht die 200 OK weiter
18. UE A bestätigt den Empfang der SIP 200 OK Nachricht 17 gemäß SIP Standard durch Senden einer SIP ACK Nachricht.
19. P-CSCF reicht die SIP "ACK" Nachricht weiter
20. SIP Proxy reicht die SIP "ACK" Nachricht weiter
21. Gemäß 3GPP Standard beendet UE A den als zweiten empfangenen etablierten Dialog "Dialogue 1" durch Senden einer "BYE" Nachricht.
22. Erfindungsgemäß entfernt die P-CSCF bei Erhalt der "BYE" Nachricht den in dieser Nachricht angegebenen Dialog "Dialogue 1" aus der Liste der etablierten Dialoge, und überprüft dann, ob noch genau ein Dialog in dieser Liste vorhanden ist. Da in der Liste nur noch "Dialogue 2" vorhanden ist, informiert P-CSCF erfindungsgemäß den KK über die "Dialogue 2" entsprechenden Medienströme.
23. P-CSCF reicht die SIP BYE Nachricht weiter
24. SIP Proxy reicht die SIP BYE Nachricht weiter

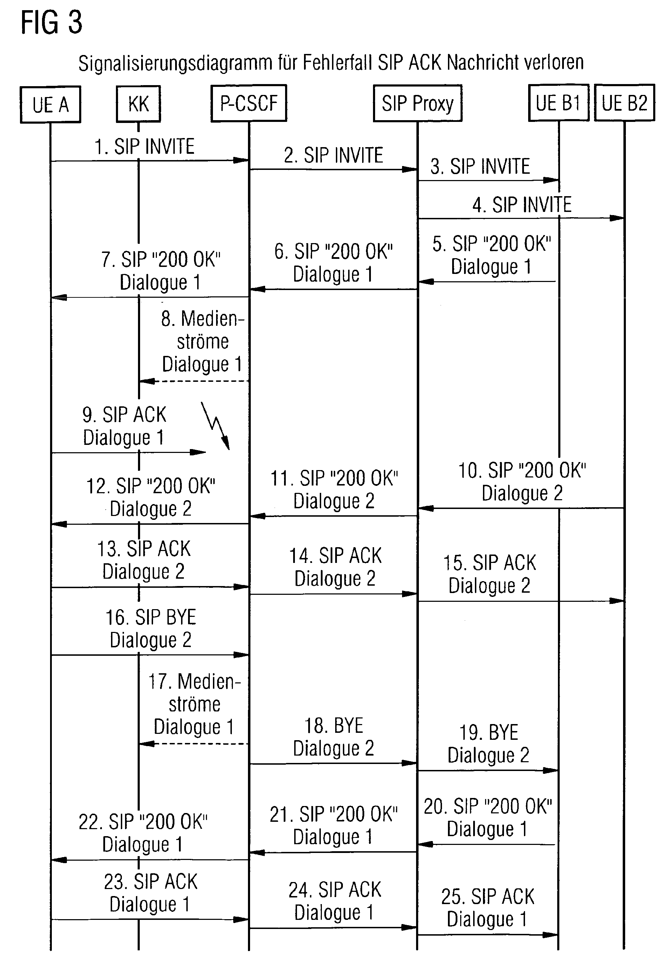

Fig. 3 zeigt ein Signalisierungsdiagramm für den Fehlerfall "SIP ACK Nachricht verloren".
Es ist ein Signalisierungsverlauf zwischen den in Fig. 1 dargestellten Netzwerkelementen dargestellt. Es wird angenommen, dass der SIP Proxy einen von UE A gesendete SIP INVITE Nachricht "forked", also verzweigt und zu UE B1 sowie UE B2 weiterleitet. Verschiedene für das Verständnis nicht wichtige SIP Nachrichten werden nicht dargestellt.

Der Signalisierungsverlauf ist im Einzelnen wie folgt:
1. bis 6. Wie Fig. 2.
7. P-CSCF speichert den Dialog 1 in einer Liste. P-CSCF reicht die "200 OK" Nachricht weiter.
8. Wie Fig. 2.
9. UE A wählt "Dialogue 1" gemäß 3GPP Standard als beizubehaltenden Wie Fig. 2.. UE A bestätigt den Empfang der SIP "200 OK" Nachricht 7 gemäß SIP Standard durch Senden einer SIP "ACK" Nachricht. Es wird angenommen, dass diese Nachricht bei der Übertragung verloren geht.
10. bis 12. Wie 9. bis 11. in Fig. 2.
13. UE A bestätigt den Empfang der SIP "200 OK" Nachricht 12 gemäß SIP Standard durch Senden einer SIP "ACK" Nachricht.
14. P-CSCF reicht die SIP "ACK" Nachricht weiter
15. SIP Proxy reicht die SIP "ACK" Nachricht weiter
16. Gemäß 3GPP Standard beendet UE A den als zweiten empfangenen etablierten Dialog "Dialogue 2" durch Senden einer "BYE" Nachricht.
17. Erfindungsgemäß entfernt die P-CSCF bei Erhalt der "BYE" Nachricht den in dieser Nachricht angegebenen Dialog "Dialogue 2" aus der Liste der etablierten Dialoge, und überprüft dann, ob noch genau ein Dialog in dieser Liste vorhanden ist. Da in der Liste nur noch Dialog 1 vorhanden ist, informiert P-CSCF erfindungsgemäß den KK über die Dialog 1 entsprechenden Medienströme. In der Variante, dass P-CSCF diese Information bereits in Schritt 8 gesendet hat, ist nun keine erneute Information nötig, da unverändert die "Dialogue 1" entsprechenden Medienströme ausgewählt sind. P-CSCF kann nun aufhören, eine Liste der etablierten Dialoge zu führen. Es kann allerdings auch nicht zu Fehlern kommen, wenn diese Liste weiter geführt wird.
18. P-CSCF reicht die SIP "BYE" Nachricht weiter
19. SIP Proxy reicht die SIP "BYE" Nachricht weiter 20 bis 25. Wie 15. bis 20. in Fig. 2.

## Patentansprüche

1. Verfahren zum Aufbau einer Verbindung in einem zellularen Mobilfunknetz,
**dadurch gekennzeichnet, dass** wenn eine Steuerungseinrichtung (P-CSCF) nach Erhalt einer ersten "2xx Final Responses" Nachricht als Antwort auf eine "SIP INVITE" Nachricht und vor Erhalt einer "ACK" Nachricht als Bestätigung dieser ersten "2xx Final Responses" Nachricht mindestens eine weitere "2xx Final Response" Nachricht als Antwort auf diese "SIP INVITE" Nachricht erhält,
die Steuerungseinrichtung (P-CSCF) beim Erhalt jeder SIP "BYE" Nachricht bezüglich eines durch die "2xx Final Response" Nachrichten erzeugten Etablierten Dialogs ("Established Dialogue") überprüft, ob noch genau ein anderer den "2xx Final Responses" Nachrichten zugeordneter Etablierter Dialog ("Established Dialogue") nicht durch eine "BYE" Nachricht beendet wurde, und in diesem Fall einen Kontrollknoten (KK, zum Beispiel eine Policy Decision Function", eine "Charging Rules Function", oder eine "Policy and Charging Rules Function") informiert, dass jetzt ausschließlich die zu dem genau einen nicht beendeten Etablierten Dialog ("Established Dialogue") gehörenden Medienströme verwendet werden sollen.

2. Verfahren nach Anspruch 1, **dadurch gekennzeichnet, dass** die Steuerungseinrichtung (P-CSCF) den Kontrollknoten (KK) bereits bei Erhalt der ersten "2xx Final Response" Nachricht darüber informiert, dass jetzt ausschließlich die zu dem entsprechenden ersten etablierten Dialog ("Established Dialogue") gehörenden Medienströme verwendet werden sollen, und den Kontrollknoten (KK) in der Folge nur dann informiert, wenn der genau eine nicht beendete etablierte Dialog ("Established Dialogue") nicht mit dem der ersten empfangenen "2xx Final Response" Nachricht entsprechenden Etablierten Dialog ("Established Dialogue") identisch ist, dass jetzt ausschließlich die zu dem genau einen nicht beendeten Etablierten Dialog ("Established Dialogue") gehörenden Medienströme verwendet werden sollen.

3. Verfahren nach einem der vorhergehenden Ansprüche, **dadurch gekennzeichnet, dass**
wenn die Steuerungseinrichtung (P-CSCF) nicht bereits beim Erhalt der ersten "2xx Final Response" Nachricht den Kontrollknoten (KK) informiert hat und ohne zwischenzeitlichen Empfang mindestens einer weiteren "2xx Final Response" Nachricht die "ACK" Nachricht zur ersten "2xx Final Response" Nachricht empfängt, die P-CSCF nun den Kontrollknoten (KK) informiert, dass jetzt ausschließlich die zu dem entsprechenden ersten etablierten Dialog ("Established Dialogue") gehörenden Medienströme verwendet werden sollen.

4. Verfahren nach einem der vorhergehenden Ansprüche, **dadurch gekennzeichnet, dass**
die Steuerungseinrichtung (P-CSCF) beim Erhalt jeder "2xx Responses" Nachricht den entsprechenden SIP Dialog in eine der "INVITE" Nachricht zugeordneten Liste einfügt, sofern der Dialog darin nicht bereits enthalten ist, und beim Erhalt jeder SIP "Bye" Nachricht den entsprechenden SIP Dialog aus dieser gespeicherten Liste löscht und dann überprüft ob die Liste noch genau einen SIP Dialog enthält.

5. Verfahren nach einem der vorhergehenden Ansprüche, **dadurch gekennzeichnet, dass**
der Kontrollknoten (KK) eine Policy Decision Function", eine "Charging Rules Function", oder eine "Policy and Charging Rules Function" ist.

6. Steuerungseinrichtung (P-CSCF) zum Aufbau einer Verbindung in einem zellularen Mobilfunknetz,
mit einer Empfangseinrichtung,
mit einer Sendeeinrichtung und
mit einer Überprüfungseinrichtung,
**dadurch gekennzeichnet, dass** die Steuerungseinrichtung so aufgebaut ist,
dass wenn die Steuerungseinrichtung nach Erhalt einer ersten "2xx Final Responses" Nachricht in der Empfangseinrichtung als Antwort auf eine "SIP INVITE" Nachricht und vor Erhalt einer "ACK" Nachricht als Bestätigung dieser ersten "2xx Final Responses" Nachricht mindestens eine weitere "2xx Final Response" Nachricht als Antwort auf diese "SIP INVITE" Nachricht erhält,
die Steuerungseinrichtung beim Erhalt jeder SIP "BYE" Nachricht bezüglich eines der durch die "2xx Final Response" Nachricht erzeugten Etablierten Dialogs ("Established Dialogue") mit der Überprüfungseinrichtung überprüft, ob noch genau ein anderer den "2xx Final Responses" entsprechender Etablierter Dialog ("Established Dialogue") durch eine "BYE" Nachricht beendet wurde, und in diesem mit der Sendeeinrichtung Fall den Kontrollknoten (KK) informiert, dass jetzt ausschließlich die zu dem genau einen nicht beendeten etablierten Dialog ("Established Dialogue") gehörenden Medienströme verwendet werden sollen.
